# EUROPÄISCHE PATENTSCHRIFT

(11) **EP 3 980 678 B1**
(45) Veröffentlichungstag und Bekanntmachung des Hinweises auf die Patenterteilung: **19.03.2025**
(21) Anmeldenummer: 20720820.8
(22) Anmeldetag: 22.04.2020
(51) Int. Cl.: F16L 41/00, F16L 55/04, F16L 55/053

(54) **ROHR MIT FLANSCH**
PIPE HAVING A FLANGE
TUYAU AVEC BRIDE

(30) Priorität: 07.06.2019 DE 102019208375
(43) Veröffentlichungstag der Anmeldung: 13.04.2022
(73) Patentinhaber: ContiTech Techno-Chemie GmbH, 61184 Karben (DE)
(72) Erfinder: KEMPF, Dominik, 30419 Hannover (DE)
(74) Vertreter: Continental Corporation
(86) Internationale Anmeldenummer: PCT/EP2020/061155
(87) Internationale Veröffentlichungsnummer: WO 2020/244842

(56) Entgegenhaltungen:
- WO-A1-2015/161930
- WO-A1-2018/232471
- CN-A- 107 830 296
- DE-C1- 10 117 731
- US-A1- 2015 240 982
- US-A1- 2018 180 456

## Beschreibung

Die vorliegende Erfindung betrifft ein Rohr gemäß dem Oberbegriff des Patentanspruchs 1.

Auf vielen technischen Gebieten ist es erforderlich, zwei Rohrelemente oder Wellenelemente starr miteinander zu einem Rohr bzw. zu einer Welle zu verbinden. Hierzu können Flansche als Verbindungselemente verwendet werden. Ein Flansch kann als kragenförmiger Abschnitt eines Endes eines Rohrelements oder eines Wellenelements angesehen werden, welcher gegenüber der Erstreckungsrichtung des Rohrelements bzw. des Wellenelements um ca. 90° gebogen ist und flächig an einem Verbindungspartner angeordnet werden kann. Mit anderen Worten kann ein Flansch als ringförmige Verbreiterung eines Endes eines Rohrelements oder eines Wellenelements verstanden werden, welche der Verbindung bzw. dem Anschluss des Rohrelements bzw. des Wellenelements an einem Verbindungspartner dient. Der Verbindungspartner kann ebenfalls ein Rohrelement bzw. ein Wellenelement aber auch ein Aggregat, ein Maschinenteil, ein Gehäuse und dergleichen sein. Zur Verbindung werden üblicherweise Schrauben und ggfs. Muttern verwendet. Ein Rohrelement mit Flansch bzw. mit Flanschelement kann ein Rohr bilden.

Mittels eines Flansches können z.B. bei einer Welle vergleichsweise große Kräfte bzw. Momente übertragen werden. Bei Rohren kann insbesondere bei Verwendung einer Dichtung zwischen dem Flansch des Rohrelements bzw. des Rohrabschnitts und dem Verbindungspartner eine mediendichte Verbindung geschaffen werden, um ein Medium wie insbesondere ein Fluid mittels des Rohres als Rohrleitung fördern zu können. Hierdurch können die beiden Rohrelemente bzw. die beiden Rohrabschnitte dicht aber zerstörungsfrei trennbar miteinander zu einem Rohr bzw. zu einer Rohrleitung verbunden werden.

Um die Eigenschaften eines zu fördernden Mediums innerhalb des Rohres bzw. innerhalb der Rohrleitung messtechnisch erfassen zu können, kann es erforderlich sein, ein Sensorelement eines Sensors im Inneren des Rohres zu positionieren, so dass das Sensorelement im direkten Kontakt mit dem zu fördernden Medium stehen kann. Hierzu wird üblicherweise die Rohrwand eines Rohrelements des Rohres z.B. durch Bohren durchdrungen, um eine Durchgangsöffnung zu schaffen, durch die hindurch das Sensorelement in das Innere des Rohrelements hineingeführt werden kann. Die Durchgangsöffnung ist dann abzudichten, um das zu fördernde Medium an dieser Stelle nicht aus dem Rohr austreten zu lassen.

Nachteilig ist hierbei, dass zur Schaffung der Durchgangsöffnung üblicherweise ein separater Prozess erforderlich ist, was einen entsprechenden Aufwand mit hieraus resultierenden erhöhten Herstellungskosten verursachen kann. Insbesondere kann das Einbringen einer Durchgangsöffnung in ein fertig hergestelltes Rohrelement einen nicht unerheblichen Aufwand darstellen.

Nachteilig ist ferner, dass zusätzliche Sensortechnik, welche dem Betrieb des Sensorelements dient und üblicherweise durch Kabel mit dem Sensorelement verbunden sein muss, außerhalb der Durchgangsöffnung von außen an dem Rohrelement anzuordnen ist während sich das Sensorelement im Inneren des Rohrelements befindet. Dies kann die Verwendung mehrerer elektronischer und bzw. oder mechanischer Komponenten der Sensortechnik erfordern, welche üblicherweise vergleichsweise klein und ggfs. hinsichtlich Feuchtigkeit, Verschmutzung und dergleichen empfindlich und daher geschützt am Rohrelement außen anzubringen sein können.

Nachteilig ist aber auch, dass es einen nicht unerheblichen Aufwand darstellen kann, das Rohrelement im Bereich der Durchgangsöffnung wieder derart mediendicht abzudichten wie vor dem Einbringen der Durchgangsöffnung. Dies kann bei hohen Drücken des zu fördernden Mediums und bzw. oder bei heißen und bzw. oder aggressiven Medien zu einem hohen Aufwand führen. Trotz dieses Aufwands kann jedoch stets eine Unsicherheit bei der Dichtigkeit des Rohrelements im Bereich der Durchgangsöffnung des Sensorelements bleiben, so dass das Einbringen eines Sensorelements in einen Rohrabschnitt durch eine Durchgangsöffnung wie zuvor beschrieben stets eine potentiellen Leckagestelle darstellt.

Die WO 2015/161930 A1 beschreibt eine Messeinrichtung einer mehrteiligen beheizbaren Medienleitung. Die Messeinrichtung umfasst zumindest ein Sensorelement. Die Messeinrichtung ist in einer als Kupplungsabschnitt ausgebildeten Aufnahmeöffnung der Leitungsverbindungseinrichtung aufgenommen. Die Messeinrichtung umfasst zumindest ein als Steckverbinder ausgebildetes und das zumindest eine Sensorelement zumindest teilweise aufnehmendes Gehäuse.

Die WO 2018/232471 A1 beschreibt ein Venturi-Rohr, umfassend: einen länglichen Hohlkörper mit einem Venturi, der im Inneren des Körpers angeordnet ist, um die Strömung eines Fluids durch den Körper zu modifizieren, einen ersten Anschlag, der an einem ersten offenen Ende des Körpers angeordnet ist, einen ersten Flansch, der an oder in Richtung des ersten offenen Endes des Körpers angrenzend an den ersten Anschlag angeordnet ist, wobei der erste Anschlag dazu dient, die Positionierung des ersten Flansches in Bezug auf den Körper zu erleichtern, der erste Flansch in Bezug auf den Körper beweglich ist, um die Ausrichtung des ersten Flansches in Bezug auf den Körper einzustellen, um den Einbau und den Ausbau des Venturirohrs in und aus einer Installation von Leitungen zu unterstützen, wobei der Flansch lösbar mit einer Leitung verbunden ist, um das Venturi aus dem Venturirohr einzusetzen oder zu lösen.

Die DE 101 17 731 C1 beschreibt ein Befestigungselement zur Fixierung von Betriebsparametern sensierende Anbaukomponenten an Anbaustellen. Die Anbaukomponente durchsetzt eine Wandung eines Bauteiles zum Teil. Das Befestigungselement ist an der Anbaukomponente diese, teilweise umschließend, aufgenommen. Dies bezieht sich auf die Verwendung eines Befestigungselementes zur Montage eines Temperaturfühlers an einem Rohrabschnitt.

Eine Aufgabe der vorliegenden Erfindung ist es, ein Rohr der eingangs beschriebenen Art bereit zu stellen, so dass ein Sensorelement einfacher, schneller, kostengünstiger und bzw. oder mediendichter als bisher bekannt in das Innere des Rohrs eingebracht werden kann. Zumindest soll eine Alternative zu derartigen bekannten Rohren geschaffen werden.

Die Aufgabe wird erfindungsgemäß durch ein Rohr mit den Merkmalen gemäß Patentanspruch 1 gelöst. Vorteilhafte Weiterbildungen sind in den Unteransprüchen beschrieben.

Somit betrifft die Erfindung ein Rohr mit einem Rohrelement zur Führung eines Mediums in einer Strömungsrichtung, mit einem Flanschelement zur Verbindung des Rohrelements mit einem Verbindungspartner, wobei das Rohrelement einen Rohrkörper mit einer Mediendurchgangsöffnung zur Führung des Mediums in der Strömungsrichtung aufweist, wobei das Flanschelement einen Flanschkörper mit einer Mediendurchgangsöffnung zur Führung des Mediums in der Strömungsrichtung aufweist, wobei das Flanschelement an einem Ende des Rohrelements derart angeordnet ist, dass sich die Mediendurchgangsöffnungen zumindest im Wesentlichen überdecken, und mit einem Sensorelement, welches in dem Flanschkörper derart angeordnet ist, dass das Sensorelement zumindest abschnittsweise mit dem Medium in Kontakt stehen kann.

Mit anderen Worten wird erfindungsgemäß ein Sensorelement nicht, wie bisher bekannt, einem Rohrelement bzw. einem Rohrabschnitt zugeordnet sondern stattdessen einem Flanschelement, welches mit dem Rohrelement zu einem Rohr bzw. zu einem Rohrabschnitt verbunden wird. Auf diese Art und Weise kann das Sensorelement bei der Fertigung an bzw. in dem Flansch angeordnet werden, was die Montage deutlich vereinfachen, beschleunigen und bzw. oder kostengünstiger machen kann. Anschließend kann das Flanschelement wie bisher mit dem Rohrelement zu einem Rohr verbunden werden.

Gleichzeitig kann auf diese Art und Weise das Sensorelement in der Mediendurchgangsöffnung des Flansches angeordnet werden und somit im Betrieb des Rohrs mit dem Medium in Kontakt kommen, um Eigenschaften des Mediums wie z.B. Temperatur, Strömungsgeschwindigkeit und dergleichen erfassen zu können. Hierzu kann das Sensorelement als autarkes Element z.B. inklusive eines elektrischen Energiespeichers und bzw. oder eines Energieerzeugungselements z.B. mittels Energy Harvesting z.B. aus der Strömung, der Temperatur, einer Temperaturdifferenz und dergleichen des Mediums bzw. der Umgebung sowie inklusive eines Sendeelements, eines Empfangselements bzw. eines Sende-/Empfangselements in der Mediendurchgangsöffnung des Flansches angeordnet sein, um dort die sensorische Erfassung ausführen zu können, ohne dass hierzu elektrische oder sonstige Kabelverbindungen zur Übertragung von elektrischer Energie und bzw. oder von Daten mit der Umgebung des Flansches erforderlich sind. Vielmehr kann des Sensorelement mittels gespeicherter und bzw. oder selbst erzeugter elektrischer Energie betrieben werden. Der Betrieb des Sensorelements kann teilweise bis vollständig selbsttätig und bzw. oder von außen durch drahtlose Kommunikation gesteuert erfolgen. Die Übertragung erfasster Daten kann seitens des Sensorelements drahtlos nach außen hin erfolgen. Hierdurch kann auf Sensordurchgangsöffnungen im Flansch zur Führung von Kabel zur Übertragung von elektrischer Energie und bzw. oder von Daten bzw. von Anweisungen in die eine und bzw. oder in die andere Richtung verzichtet werden, so dass keine Durchgangsöffnung abzudichten ist bzw. eine potentielle Leckagestelle darstellen kann. Dies kann die Dichtigkeit besonders verbessern bzw. sicherstellen.

Nichtsdestotrotz kann auch eine Sensordurchgangsöffnung im Flansch vorgesehen sein, wie im Folgenden näher beschrieben werden wird, da auch dies Vorteile bieten und die zuvor genannten Eigenschaften und Vorteile teilweise bis vollständig erreichen kann.

Gemäß einem Aspekt der Erfindung ist das Sensorelement in dem Flanschkörper derart angeordnet, dass sich das Sensorelement zumindest abschnittsweise in die Durchgangsöffnung des Flanschelements erstreckt. Dies kann ggfs. die sensorische Erfassung von Eigenschaften des Mediums im Betrieb verbessern, da die Kontaktfläche zwischen Sensorelement und Medium vergrößert werden kann. Auch kann es für bestimmte Eigenschaften wie z.B. die Strömungsgeschwindigkeit vorteilhaft oder sogar erforderlich sein, das Sensorelement zumindest abschnittsweise von dem Medium umströmen zu lassen. Dies kann durch ein Hineinragen des Sensorelements in die Mediendurchgangsöffnung, welche im Betrieb von dem Medium in der Strömungsrichtung durchströmt wird, erreicht bzw. begünstigt werden.

Erfindungsgemäß weist das Flanschelement eine Sensordurchgangsöffnung auf, welche die Mediendurchgangsöffnung des Flanschelements mit der Umgebung des Flanschelements verbindet, wobei das Sensorelement zumindest abschnittsweise in der Sensordurchgangsöffnung angeordnet ist. Wie bereits zuvor als eine Variante erwähnt, wird gemäß diesem Aspekt der Erfindung eine Sensordurchgangsöffnung durch das Material des Flansches hindurch vorgesehen, welche die Mediendurchgangsöffnung des Flansches mit der Umgebung des Flansches verbindet. In diese Sensordurchgangsöffnung kann bei der Fertigung das Sensorelement derart eingesetzt werden, dass das Sensorelement wie zuvor beschrieben im Betrieb Eigenschaften des Mediums sensorisch erfassen kann. Die hierfür erforderliche elektrische Energie kann in diesem Fall durch die Sensordurchgangsöffnung hindurch insbesondere kabelgebunden zugeführt werden. Ebenso können Anweisungen durch die Sensordurchgangsöffnung hindurch insbesondere über ein entsprechendes Datenkabel zum Sensorelement hin sowie erfasste Daten, welche Messwerte repräsentieren, vom Sensorelement weg nach außerhalb des Flansches übertragen werden. Dies kann die Verwendung einer drahtlosen bzw. kabellosen Energie- und bzw. oder Datenübertragung begünstigen, da das Material des Flansches nicht durchdrungen werden muss. Auch kann hierdurch eine drahtgeführte bzw. kabelgeführte Energie- und bzw. oder Datenübertragung ermöglicht werden, welche je nach Anwendungsfall kostengünstiger, robuster und bzw. oder langlebiger sein kann.

Die Befestigung des Sensorelements in der Sensordurchgangsöffnung kann insbesondere mittels Klebung oder durch Einschrauben erfolgen. Hierdurch kann gleichzeitig eine teilweise bis vollständige Abdichtung durch den Klebstoff bzw. durch das Gewinde erfolgen. Auch kann das Sensorelement von radial außen in die Sensordurchgangsöffnung eingesteckt und von außen gegen herausrutschen gesichert werden, z.B. durch wenigstens ein zusätzliches Sicherungselement wie z.B. einen Sicherungsring oder dergleichen oder durch wenigstens ein weiteres Element eines Sensors des Sensorelements, welches seinerseits gehalten werden kann. In diesem Fall kann durch eine entsprechend enge Bemaßung von Sensordurchgangsöffnung zu Sensorelement eine gewisse Dichtigkeit erreicht werden. In jedem Fall kann die zusätzliche Verwendung eines Dichtelements vorteilhaft sein, welches zwischen dem Sensorelement und der Sensordurchgangsöffnung angeordnet und mediendicht wirken kann.

Gemäß einem weiteren Aspekt der Erfindung erstreckt sich die Sensordurchgangsöffnung zumindest im Wesentlichen senkrecht zur Strömungsrichtung des Mediums. Dies kann das Herstellen der Sensordurchgangsöffnung z.B. durch Bohren vereinfachen. Auch kann hierdurch die Anordnung eines senkrecht zur Strömungsrichtung des Mediums ausgerichteten Sensorelements begünstigt werden. Ferner kann der Platzbedarf für die Sensordurchgangsöffnung im Material des Flanschkörpers in der Strömungsrichtung des Mediums hierdurch möglichst geringgehalten werden, so dass das Flanschelement in der Strömungsrichtung des Mediums möglichst flach gehalten werden kann. Dies kann die Verwendung des Sensorelements wie beschrieben ermöglichen, ohne die Konstruktion bisher verwendeter Flanschelemente wesentlich ändern zu müssen.

Gemäß einem weiteren Aspekt der Erfindung ist die Sensordurchgangsöffnung als Bohrung in den Flanschkörper ausgebildet. Dies kann die Herstellung des Flanschelement vereinfachen, wie zuvor beschrieben.

Erfindungsgemäß weist das Flanschelement eine Pulsationsdämpfungskammer auf, welche als Aussparung innerhalb des Flanschkörpers zur Mediendurchgangsöffnung hin offen ausgebildet ist. Auf diese Art und Weise kann zusätzlich die Möglichkeit einer Pulsationsdämpfung des Mediums seitens des Flanschelements geschaffen werden, so dass die Dämpfung von Pulsationen im Medium ohne weitere Maßnahmen erreicht werden kann. Insbesondere kann diese Funktion zusätzlich durch das Flanschelement ausgeübt werden, so dass kein zusätzliches Pulsationsdämpfungselemente verwendet werden müssen, was zusätzlichen Aufwand bedeuten und insbesondere die Gefahr zusätzlicher potentiellen Leckagestellen erhöhen könnte.

Gemäß einem weiteren Aspekt der Erfindung weist die Pulsationsdämpfungskammer eine Helmholtz-Blende oder eine Dämpfungsmembran auf. Die entsprechenden Eigenschaften und Vorteile können somit bei dem Flanschelement bzw. bei dem Rohr genutzt werden.

Erfindungsgemäß ist die Pulsationsdämpfungskammer der Sensordurchgangsöffnung direkt gegenüberliegend angeordnet. Auf diese Art und Weise kann die Pulsationsdämpfungskammer von radial innen durch die radial gegenüberliegende Sensordurchgangsöffnung in das Material des Flanschkörpers eingebracht werden, so dass dies nicht auf der Seite der Pulsationsdämpfungskammer z.B. von radial außen erfolgen muss. In diesem Fall wäre die Pulsationsdämpfungskammer wieder von radial außen zu verschließen, was einen zusätzlichen Aufwand bedeuten kann, welche durch das Einbringen von radial innen nach außen vermieden werden kann. Auch könnte dies zu einer weiteren potentiellen Leckagestelle führen.

Gemäß einem weiteren Aspekt der Erfindung ist die Pulsationsdämpfungskammer als Bohrung in den Flanschkörper durch die Sensordurchgangsöffnung hindurch ausgebildet. Hierdurch kann der zuvor beschriebene Aspekt der Erfindung besonders einfach umgesetzt werden, indem die Bohrung lediglich entsprechend weit ausgeführt werden muss, um in einem Arbeitsschritt sowohl die Sensordurchgangsöffnung als auch die Pulsationsdämpfungskammer auszubilden.

Gemäß einem weiteren Aspekt der Erfindung weist das Flanschelement eine Sensoraufnahme auf, welche ein Sensorgehäuse zumindest im Wesentlichen aufnimmt. Mit anderen Worten kann ein Sensorgehäuse, welches gemeinsam mit dem Sensorelement sowie ggfs. weiteren Elementen wie einer Auswerteelektronik, einer Datenübertragung, einem elektrischen Energiespeicher und dergleichen einen Sensor bilden und diese Elemente in sich schützend aufnehmen kann, ebenfalls von dem Flanschelement aufgenommen und gehalten werden. Hierdurch kann ein gesamter Sensor inkl. Sensorelement bei der Fertigung an dem Flanschelement angeordnet und in einem nachfolgenden Montageschritt zusammen mit dem Flanschelement am Rohrelement angeordnet werden. Dies kann die Fertigung entsprechend vereinfachen, beschleunigen und bzw. oder kostengünstiger werden lassen.

Gemäß einem weiteren Aspekt der Erfindung ist die Sensoraufnahme einstückig mit dem Flanschkörper ausgebildet. Dies kann den Halt der Sensoraufnahme samt dem dort aufgenommenen Sensor mit dem Flanschelement verbessern. Auch kann dies die Herstellung vereinfachen.

Gemäß einem weiteren Aspekt der Erfindung sind die Volumen, welche von der Sensoraufnahme und der Sensordurchgangsöffnung zumindest abschnittsweise umschlossen werden, miteinander verbunden. Dies kann die direkte Durchführung des Sensorelements in die Sensordurchgangsöffnung beim Einsetzen des Sensors und die Sensoraufnahme des Flanschkörpers ermöglichen bzw. begünstigen, so dass dies in einem Arbeitsschritt erfolgen kann.

Gemäß einem weiteren Aspekt der Erfindung ist die Sensoraufnahme zumindest abschnittsweise direkt radial außenliegend zur Sensordurchgangsöffnung angeordnet. Dies kann den zuvor beschriebenen Aspekt der Erfindung begünstigen.

Gemäß einem weiteren Aspekt der Erfindung sind das Rohrelement und das Flanschelement separat hergestellt und anschließend miteinander zum Rohr verbunden. Dies kann die Herstellung vereinfachen. Die Verbindung zwischen dem einen Ende des Rohrelements und dem Flanschelement kann vorzugsweise stoffschlüssig hergestellt werden, um eine möglichst dauerhaft haltbare sowie mediendichte Verbindung an dieser Stelle zu schaffen. Dies kann je nach Anwendungsfall z.B. durch Kleben oder durch Schweißen, insbesondere durch Laserschweißen oder Plasmaschweißen, erfolgen. Das Rohrelement und das Flanschelement können auf diese Art und Weise zu einem einteiligen Verbund in Form eines Rohrs zusammengefügt werden.

Mit anderen Worten kann ein heutiger (Aluminium-)Flansch seine ursprüngliche Dicke behalten, bekommt aber eine zusätzliche Ausbringung an der Seite. Die komplette Kontur (Flansch und Ausbringung) ist aus einem Stück gefertigt und birgt somit keine (zusätzliche) potentielle Leckagestelle. Die eigentliche Messzelle kann seitlich eingesetzt und wie, wenn sie in einem eigenen Gehäuse sitzt, vergossen oder verpresst werden. Ferner kann im Flansch durch die Art der nötigen, seitlichen Bearbeitung "kosten-neutral" eine Fluid-PulsationsDämpfungskammer eingebracht werden, entweder "offen" oder mit einer zusätzlich eingebrachten Helmholzblende, Dämpfungsmembran oder dergleichen. Hierdurch kann ein kostengünstiges Rohr wie zuvor beschrieben geschaffen werden, da die Herstellung mit weniger Prozessschritte als bisher bekannt erfolgen kann. Auch kann die Anzahl von Dichtstellen reduziert werden.

Ein Ausführungsbeispiel und weitere Vorteile der Erfindung werden nachstehend im Zusammenhang mit den folgenden Figuren erläutert. Darin zeigt:
- Fig. 1: einen schematischen Längsschnitt eines erfindungsgemäßen Flanschelements; und
- Fig. 2: einen schematischen Längsschnitt eines erfindungsgemäßen Rohrs.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung (nicht dargestellt).

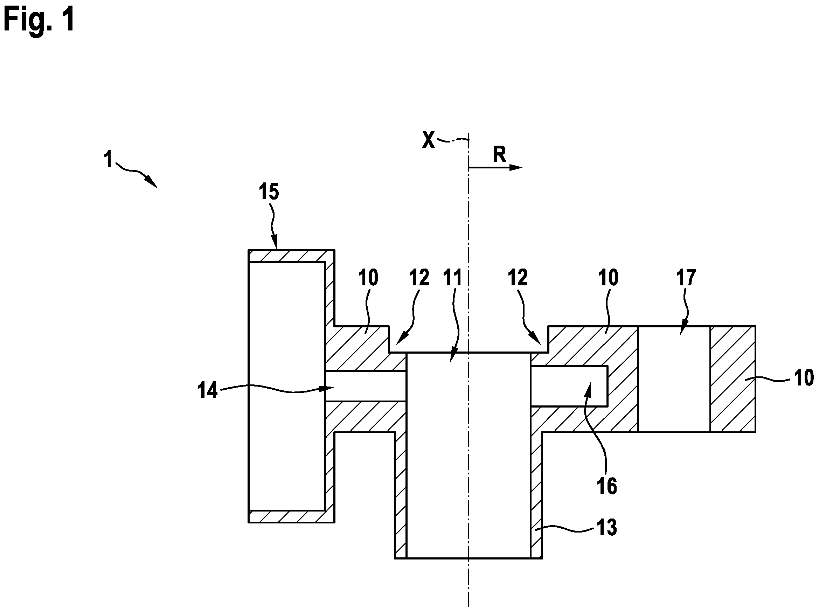

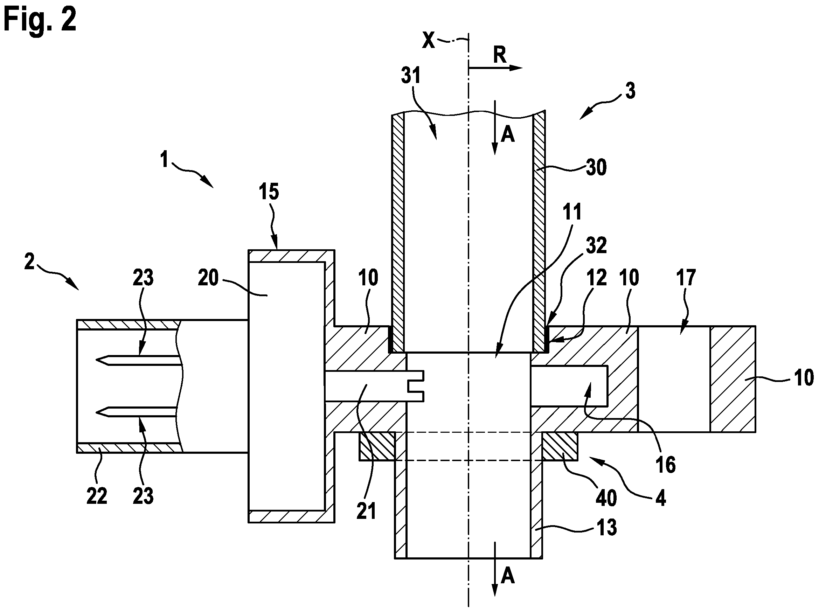

Fig. 1 zeigt einen schematischen Längsschnitt eines erfindungsgemäßen Flanschelements 1. Das Flanschelement 1 besteht aus einem Flanschkörper 10 aus Aluminium, welcher einstückig z.B. als Gussteil oder als Frästeil hergestellt ist. Entlang der Längsachse X weist der Flanschkörper 10 eine Mediendurchgangsöffnung 11 auf, durch welche hindurch ein Medium wie z.B. ein Fluid in einer Strömungsrichtung A (oder in der entgegengesetzten Richtung) strömen kann, wie anhand der Fig. 2 näher erläutert werden wird. In der Darstellung der Fig. 1 ist eine Rohraufnahme 12 vorgesehen, welche ein Rohrelement 3 aufnehmen kann, wie ebenfalls anhand der Fig. 2 näher erläutert werden wird. Die Rohraufnahme 12 ist hierzu als Senke bzw. als Vertiefung ausgebildet.

Der Rohraufnahme 12 weist entlang der Längsachse X gegenüberliegend ein Führungselement 13 auf, welches als ringförmiger Vorsprung von dem Flanschkörper 10 weg zeigt und dafür ausgebildet ist, in eine korrespondierende Öffnung eines Verbindungspartners wie z.B. eines Aggregats (nicht dargestellt) eingeführt zu werden. Um das Führungselement 13 herum kann ein in der Umfangsrichtung geschlossener Dichtungsringkörper 40 eines Dichtungselements 4 angeordnet werden, siehe Fig. 2.

Senkrecht bzw. radial zur Längsachse X erstreckt sich eine seitliche Sensordurchgangsöffnung 14, welche in den Fig. 1 und 2 nach links hin dargestellt ist. Die Sensordurchgangsöffnung 14 ist als Bohrung seitlich nach radial innen in den Flanschkörper 10 eingebracht und verbindet so die Mediendurchgangsöffnung 11 radial mit der Umgebung des Flanschelements 1. Radial außenseitig schließt sich dabei eine seitliche Sensoraufnahme 15 an die Sensordurchgangsöffnung 14 an, welche in der Umfangsrichtung (nicht dargestellt) und entlang der Längsachse X deutlich größer ausgebildet ist als die Sensordurchgangsöffnung 14, so dass hier ein Sensor 2 bzw. dessen Sensorgehäuse 20 aufgenommen werden kann. Ein Sensorelement 21 des Sensors 2 kann sich auf diese Art und Weise durch die Sensordurchgangsöffnung 14 hindurch in die Mediendurchgangsöffnung 11 hinein erstrecken, wie anhand der Fig. 2 noch näher beschrieben werden wird.

Durch die Sensordurchgangsöffnung 14 hindurch wird beim Bohren auf der radial gegenüberliegenden Seite der Mediendurchgangsöffnung 11 in das Material des Flanschkörper 10 hinein eine weitere Bohrung eingebracht, welche eine Pulsationsdämpfungskammer 16 bildet. Die Pulsationsdämpfungskammer 16 kann offen ausgebildet, wie in den Fig. 1 und 2 dargestellt, oder mit einer Helmholtz-Blende oder mit einer Dämpfungsmembran (nicht dargestellt) versehen sein. Hierdurch können Pulsationen im Medium, welches durch die Mediendurchgangsöffnung 11 hindurchströmt, gedämpft werden.

Der Flanschkörper 10 weist ferner eine Verbindungsdurchgangsöffnung 17 auf, welche parallel zur Mediendurchgangsöffnung 11 verläuft. Durch die Verbindungsdurchgangsöffnung 17 kann ein Verbindungselement wie z.B. eine Schraube geführt werden, um das Flanschelement 1 samt daran befestigtem Rohrelement 3 an einem Verbindungspartner (nicht dargestellt) wie z.B. einem Aggregat zu befestigen.

Fig. 2 zeigt einen schematischen Längsschnitt eines erfindungsgemäßen Rohrs 1, 3. Das Rohr 1, 3 weist das bereits zuvor erwähnte Rohrelement 3 auf, welches aus einem einstückigen zylindrischen Rohrkörper 30 aus Aluminium besteht, welcher sich entlang der Längsachse X erstreckt. Der Rohrkörper 30 kann auch als Rohrwand 30 bezeichnet werden. Das hohle Innere des Rohrkörper 30 bildet dessen Mediendurchgangsöffnung 31, welche denselben Querschnitt wie die Mediendurchgangsöffnung 11 des Flanschkörpers 10 aufweist. Das Rohrelement 3 kann noch weitere Elemente wie z.B. Halterungs- und Verbindungselemente (nicht dargestellt) und dergleichen aufweisen.

Der Rohrkörper 30 wird bei der Montage mit einem offenen Ende in die Rohraufnahme 12 des Flanschkörpers 10 eingesetzt. Der Rohrkörper 30 und der Flanschkörper 10 werden dort miteinander z.B. durch Laserschweißen verschweißt, so dass sich dort eine stoffschlüssige Verbindung 32 in Form einer Schweißverbindung 32 bildet. Hierdurch wird ein einteiliges Rohr 1, 3 gebildet.

Anschließend wird der bereits zuvor erwähnte Sensor 2 in die seitliche Sensoraufnahme 15 des Flanschelements 1 von radial außen eingesetzt, so dass das Sensorgehäuse 20 in der seitlichen Sensoraufnahme 15 sowohl radial als auch in der Umgangsrichtung sowie entlang der Längsachse X anliegt. Dort kann der Sensor 2 z.B. durch Kleben fixiert werden. Gleichzeitig ragt das Sensorelement 21, welches auch als Messfühler 21 bezeichnet werden kann, radial nach innen in die Mediendurchgangsöffnung 11 des Flanschkörpers 10 hinein, so dass der Messfühler 21 bzw. dessen Messspitze (nicht bezeichnet) von dem Medium umströmt werden kann. Dies kann es dem Messfühler 21 ermöglichen, Eigenschaften des Mediums wie z.B. dessen Temperatur, dessen Strömungsgeschwindigkeit und dergleichen zu erfassen. Der Messfühler 21 wird dabei in der Sensordurchgangsöffnung 14 verklebt, sodass hierdurch ein sicherer Halt sowie eine mediendichte Abdichtung erreicht werden kann.

Nach radial außen hin weist der Sensor 2 ein Paar von Steckerkontakten 23 auf, welche dem Anschluss eines korrespondierenden Steckers z.B. zur elektrischen Energieversorgung bzw. zum Datenaustausch des Sensors 2 dienen. Die Steckerkontakte 23 werden von einem Steckerkragen 22 umgeben, um diese zu schützen.

Auf diese Art und Weise kann ein Rohr 1, 3 geschaffen werden, welches mittels eines Flansches 1 wie bisher bekannt mit einem Verbindungspartner verbunden werden kann. Dies kann wie zuvor beschrieben z.B. mittels einer Schraube durch die Verbindungsdurchgangsöffnung 17 hindurch erfolgen. Gleichzeitig kann eine Abdichtung gegenüber dem Verbindungspartner wie z.B. einem Aggregat mittels des zuvor bereits erwähnten Dichtelements 4 erfolgen. Dabei kann ferner der Messfühler 21 derart angeordnet werden, dass der Messfühler 21 bzw. dessen Messspitze das Medium erreichen und wenigstens eine Eigenschaft des Mediums sensorisch erfassen kann. Dies kann mediendicht erfolgen. Gleichzeitig kann dies vergleichsweise einfach erfolgen, da lediglich das Flanschelement 1 hierzu zu bearbeiten ist anstelle des Rohrelements 3. Dies kann nicht nur die Herstellungskosten geringhalten, sondern auch potentielle Leckagestellen vermeiden.

### Bezugszeichenliste (Teil der Beschreibung)

- A: Strömungsrichtung des Mediums
- R: radiale Richtung
- X: Längsachse

- 1: Flanschelement
- 10: Flanschkörper
- 11: Mediendurchgangsöffnung
- 12: Rohraufnahme
- 13: Führungselement
- 14: (seitliche) Sensordurchgangsöffnung
- 15: (seitliche) Sensoraufnahme
- 16: Pulsationsdämpfungskammer
- 17: Verbindungsdurchgangsöffnung

- 2: Sensor
- 20: Sensorgehäuse
- 21: Sensorelement; Messfühler
- 22: Steckerkragen
- 23: Steckkontakte

- 3: Rohrelement
- 30: Rohrkörper; Rohrwand
- 31: Mediendurchgangsöffnung
- 32: Verbindung; Schweißverbindung

- 4: Dichtelement
- 40: Dichtelementkörper

## Patentansprüche

1. Rohr (1, 3)
mit einem Rohrelement (3) zur Führung eines Mediums in einer Strömungsrichtung (A),
mit einem Flanschelement (1) zur Verbindung des Rohrelements (3) mit einem Verbindungspartner,
wobei das Rohrelement (3) einen Rohrkörper (30) mit einer Mediendurchgangsöffnung (31) zur Führung des Mediums in der Strömungsrichtung (A) aufweist,
wobei das Flanschelement (1) einen Flanschkörper (10) mit einer Mediendurchgangsöffnung (11) zur Führung des Mediums in der Strömungsrichtung (A) aufweist,
wobei das Flanschelement (1) an einem Ende des Rohrelements (3) derart angeordnet ist, dass sich die Mediendurchgangsöffnungen (11, 31) zumindest im Wesentlichen überdecken, und
mit einem Sensorelement (21), welches in dem Flanschkörper (10) derart angeordnet ist, dass das Sensorelement (21) zumindest abschnittsweise mit dem Medium in Kontakt stehen kann,
wobei das Flanschelement (1) eine Sensordurchgangsöffnung (14) aufweist, welche die Mediendurchgangsöffnung (11) des Flanschelements (1) mit der Umgebung des Flanschelements (1) verbindet,
wobei das Sensorelement (14) zumindest abschnittsweise in der Sensordurchgangsöffnung (14) angeordnet ist.
**dadurch gekennzeichnet, dass**
das Flanschelement (1) eine Pulsationsdämpfungskammer (16) aufweist, welche als Aussparung innerhalb des Flanschkörpers (10) zur Mediendurchgangsöffnung (11) hin offen ausgebildet ist,
wobei die Pulsationsdämpfungskammer (16) der Sensordurchgangsöffnung (14) direkt gegenüberliegend angeordnet ist.

2. Rohr (1, 3) nach Anspruch 1, **dadurch gekennzeichnet, dass** das Sensorelement (21) in dem Flanschkörper (10) derart angeordnet ist, dass sich das Sensorelement (21) zumindest abschnittsweise in die Durchgangsöffnung (11) des Flanschelements (1) erstreckt.

3. Rohr (1, 3) nach Anspruch 1 oder 2, **dadurch gekennzeichnet, dass** sich die Sensordurchgangsöffnung (14) zumindest im Wesentlichen senkrecht zur Strömungsrichtung (A) des Mediums erstreckt.

4. Rohr (1, 3) nach einem der vorangehenden Ansprüche, **dadurch gekennzeichnet, dass**
die Sensordurchgangsöffnung (14) als Bohrung in den Flanschkörper (10) ausgebildet ist.

5. Rohr (1, 3) nach einem der vorangehenden Ansprüche, **dadurch gekennzeichnet, dass**
die Pulsationsdämpfungskammer (16) eine Helmholtz-Blende oder eine Dämpfungsmembran aufweist.

6. Rohr (1, 3) nach einem der vorangehenden Ansprüche, **dadurch gekennzeichnet, dass**
die Pulsationsdämpfungskammer (16) als Bohrung in den Flanschkörper (10) durch die Sensordurchgangsöffnung (14) hindurch ausgebildet ist.

7. Rohr (1, 3) nach einem der vorangehenden Ansprüche, **dadurch gekennzeichnet, dass**
das Flanschelement (1) eine Sensoraufnahme (15) aufweist, welche ein Sensorgehäuse (20) zumindest im Wesentlichen aufnimmt.

8. Rohr (1, 3) nach Anspruch 7, **dadurch gekennzeichnet, dass**
die Sensoraufnahme (15) einstückig mit dem Flanschkörper (10) ausgebildet ist.

9. Rohr (1, 3) nach Anspruch 7 oder 8, **dadurch gekennzeichnet, dass** die Volumen, welche von der Sensoraufnahme (15) und der Sensordurchgangsöffnung (14) zumindest abschnittsweise umschlossen werden, miteinander verbunden sind.

10. Rohr (1, 3) nach einem der Ansprüche 7 bis 9, **dadurch gekennzeichnet, dass**
die Sensoraufnahme (15) zumindest abschnittsweise direkt radial außenliegend zur Sensordurchgangsöffnung (14) angeordnet ist.

11. Rohr (1, 3) nach einem der vorangehenden Ansprüche, **dadurch gekennzeichnet, dass**
das Rohrelement (3) und das Flanschelement (1) separat hergestellt und anschließend miteinander zum Rohr (1, 3) verbunden sind.

## Claims

1. Pipe (1, 3)
having a pipe element (3) for conveying a medium in a flow direction (A),
having a flange element (1) for connecting the pipe element (3) to a connection partner,
wherein the pipe element (3) has a pipe body (30) with a media passage opening (31) for conveying the medium in the flow direction (A),
wherein the flange element (1) has a flange body (10) with a media passage opening (11) for conveying the medium in the flow direction (A),
wherein the flange element (1) is arranged at one end of the pipe element (3) in such a way that the media passage openings (11, 31) at least essentially overlap, and
having a sensor element (21) which is arranged in the flange body (10) such that at least a portion of the sensor element (21) can be in contact with the medium, wherein the flange element (1) has a sensor passage opening (14) which connects the media passage opening (11) of the flange element (1) to the environment of the flange element (1),
wherein at least a portion of the sensor element (14) is arranged in the sensor passage opening (14),
**characterized in that**
the flange element (1) has a pulsation damping chamber (16) which is configured as a recess inside the flange body (10) open towards the media passage opening (11),
wherein the pulsation damping chamber (16) is arranged directly opposite the sensor passage opening (14).

2. Pipe (1, 3) according to Claim 1, **characterized in that**
the sensor element (21) is arranged in the flange body (10) such that at least a portion of the sensor element (21) extends into the passage opening (11) of the flange element (1).

3. Pipe (1, 3) according to Claim 1 or 2, **characterized in that** the sensor passage opening (14) extends at least substantially perpendicularly to the flow direction (A) of the medium.

4. Pipe (1, 3) according to any of the preceding claims, **characterized in that** the sensor passage opening (14) is formed as a bore in the flange body (10).

5. Pipe (1, 3) according to any of the preceding claims, **characterized in that** the pulsation damping chamber (16) comprises a Helmholtz resonator or a damping membrane.

6. Pipe (1, 3) according to any of the preceding claims, **characterized in that** the pulsation damping chamber (16) is formed as a bore in the flange body (10) through the sensor passage opening (14).

7. Pipe (1, 3) according to any of the preceding claims, **characterized in that** the flange element (1) has a sensor receiver (15) which at least substantially receives a sensor housing (20).

8. Pipe (1, 3) according to Claim 7, **characterized in that** the sensor receiver (15) is formed integrally with the flange body (10).

9. Pipe (1, 3) according to Claim 7 or 8, **characterized in that** the volumes encased at least in portions by the sensor receiver (15) and the sensor passage opening (14) are connected together.

10. Pipe (1, 3) according to any of Claims 7 to 9, **characterized in that** at least a portion of the sensor receiver (15) is arranged directly radially outside the sensor passage opening (14).

11. Pipe (1, 3) according to any of the preceding claims, **characterized in that** the pipe element (3) and the flange element (1) are produced separately and then connected together to form the pipe (1, 3).

## Revendications

1. Tube (1, 3)
avec un élément tubulaire (3) pour guider un fluide dans une direction d'écoulement (A),
avec un élément de bride (1) pour relier l'élément tubulaire (3) à un partenaire de liaison,
l'élément tubulaire (3) présentant un corps tubulaire (30) avec une ouverture de passage de fluide (31) pour guider le fluide dans la direction d'écoulement (A), l'élément de bride (1) présentant un corps de bride (10) avec une ouverture de passage de fluide (11) pour guider le fluide dans la direction d'écoulement (A), l'élément de bride (1) étant agencé à une extrémité de l'élément tubulaire (3) de telle sorte que les ouvertures de passage de fluide (11, 31) se recouvrent au moins essentiellement, et
avec un élément de capteur (21) qui est agencé dans le corps de bride (10) de telle sorte que l'élément de capteur (21) peut être en contact avec le fluide au moins par sections,
l'élément de bride (1) présentant une ouverture de passage de capteur (14) qui relie l'ouverture de passage de fluide (11) de l'élément de bride (1) à l'environnement de l'élément de bride (1),
l'élément de capteur (14) étant agencé au moins par sections dans l'ouverture de passage de capteur (14).
**caractérisé en ce que**
l'élément de bride (1) présente une chambre d'amortissement de pulsations (16) qui est réalisée sous forme d'évidement à l'intérieur du corps de bride (10) ouvert vers l'ouverture de passage de fluide (11),
la chambre d'amortissement de pulsations (16) étant agencée directement en face de l'ouverture de passage de capteur (14).

2. Tube (1, 3) selon la revendication 1, **caractérisé en ce que** l'élément de capteur (21) est agencé dans le corps de bride (10) de telle sorte que l'élément de capteur (21) s'étend au moins par sections dans l'ouverture de passage (11) de l'élément de bride (1).

3. Tube (1, 3) selon la revendication 1 ou 2, **caractérisé en ce que** l'ouverture de passage de capteur (14) s'étend au moins essentiellement perpendiculairement à la direction d'écoulement (A) du fluide.

4. Tube (1, 3) selon l'une quelconque des revendications précédentes, **caractérisé en ce que**
l'ouverture de passage de capteur (14) est réalisée sous forme d'alésage dans le corps de bride (10).

5. Tube (1, 3) selon l'une quelconque des revendications précédentes, **caractérisé en ce que**
la chambre d'amortissement de pulsations (16) présente un diaphragme de Helmholtz ou une membrane d'amortissement.

6. Tube (1, 3) selon l'une quelconque des revendications précédentes, **caractérisé en ce que**
la chambre d'amortissement de pulsations (16) est réalisée sous forme d'alésage dans le corps de bride (10) à travers l'ouverture de passage de capteur (14).

7. Tube (1, 3) selon l'une quelconque des revendications précédentes, **caractérisé en ce que**
l'élément de bride (1) présente un logement de capteur (15) qui reçoit au moins essentiellement un boîtier de capteur (20).

8. Tube (1, 3) selon la revendication 7, **caractérisé en ce que** le logement de capteur (15) est réalisé d'un seul tenant avec le corps de bride (10).

9. Tube (1, 3) selon la revendication 7 ou 8, **caractérisé en ce que** les volumes qui sont entourés par le logement de capteur (15) et l'ouverture de passage de capteur (14), au moins par sections, sont reliés entre eux.

10. Tube (1, 3) selon l'une quelconque des revendications 7 à 9, **caractérisé en ce que**
le logement de capteur (15) est agencé, au moins par sections, directement radialement à l'extérieur de l'ouverture de passage de capteur (14).

11. Tube (1, 3) selon l'une quelconque des revendications précédentes, **caractérisé en ce que**
l'élément tubulaire (3) et l'élément de bride (1) sont fabriqués séparément et sont ensuite reliés entre eux pour former le tube (1, 3).
